# EUROPÄISCHE PATENTSCHRIFT

(11) **EP 1 248 025 B1**
(45) Veröffentlichungstag und Bekanntmachung des Hinweises auf die Patenterteilung: **26.04.2006**
(21) Anmeldenummer: 02003389.0
(22) Anmeldetag: 14.02.2002
(51) Int. Cl.: F16J 15/32

(54) **Dichtring**
Sealing ring
Joint d'étanchéité

(30) Priorität: 04.04.2001 DE 10116846
(43) Veröffentlichungstag der Anmeldung: 09.10.2002
(73) Patentinhaber: Carl Freudenberg KG, 69469 Weinheim (DE)
(72) Erfinder: Wüstenhagen, Ulrich, 34613 Schwalmstadt (DE); Barillas, Gonzalo, 36304 Alsfeld-Altenburg (DE); Kinsch, Patrick, 34590 Wabern (DE)

(56) Entgegenhaltungen:
- DE-A- 19 809 303
- DE-C- 854 448
- DE-U- 29 880 133
- GB-A- 544 881
- US-A- 5 127 497
- US-A- 5 897 119

## Beschreibung

Die Erfindung betrifft einen Dichtring, umfassend einen Tragkörper, ein Führungselement und eine Dichtlippe, die mit axialem Abstand zum Führungselement angeordnet und axial in dessen Richtung und axial in Richtung des abzudichtenden Mediums in einem abzudichtenden Raum vorgewölbt ist, wobei das Führungselement an der zweiten Stirnseite des Tragkörpers angelenkt ist und wobei die Dichtlippe an der der zweiten Stirnseite axial gegenüber liegend angeordneten ersten Stirnseite des Tragkörpers angelenkt ist, wobei axial zwischen dem stirnseitig einerseits angeordneten Führungselement und der stirnseitig andererseits angeordneten Dichtlippe kein weiteres Führungselement und/oder keine weitere Dichtlippe angeordnet ist.

### Stand der Technik

Ein solcher Dichtring ist aus der DE 854 448 C bekannt. Das Führungselement und die Dichtlippe sind jeweils separat erzeugt und während der bestimmungsgemäßen Verwendung des vorbekannten Dichtrings miteinander verbunden. Das Führungselement besteht aus einem Stahlband.

Ein weiterer Dichtring ist aus der DE 298 80 133 U bekannt. Das Führungselement und die Dichtlippe sind jeweils separat erzeugt und jeweils in einem Einbauraum eines Anbringungsrings angeordnet, wobei der Anbringungsring seinerseits durch Dichtelemente gegenüber seinem Einbauraum abgedichtet ist.

Bei den zuvor genannten Dichtringen ergeben sich durch die Mehrteiligkeit Nachteile bei Fertigung, Montage und Preis.

Ein weiterer Dichtring ist aus der DE 198 09 303 A1 bekannt. Der vorbekannte Dichtring besteht aus einem Kunststoff mit Formgedächtnis, wobei das Führungselement unmittelbar auf der Oberfläche einer abzudichtenden Welle abgestützt ist. Die Dichtlippe ist, genauso wie das Führungselement, an einem Tragkörper angeformt und umschließt die abzudichtende Welle unter elastischer Vorspannung. Auf der der abzudichtenden Welle radial abgewandten Seite des Tragkörpers ist ein starrer Ring angeordnet, der sich über die gesamte axiale Länge des Tragkörpers erstreckt. Dieser Ring koppelt das Führungselement und die Dichtlippe miteinander, so dass auch bei starken Auslenkbewegungen der Oberfläche der abzudichtenden Welle in radialer Richtung die Dichtwirkung der Dichtlippe aufrechterhalten bleiben soll. Der starre Ring, der Führungselement und Dichtlippe miteinander koppelt, soll außerdem bewirken, dass unzulässig hohe Erwärmungen der Dichtlippe vermieden werden.

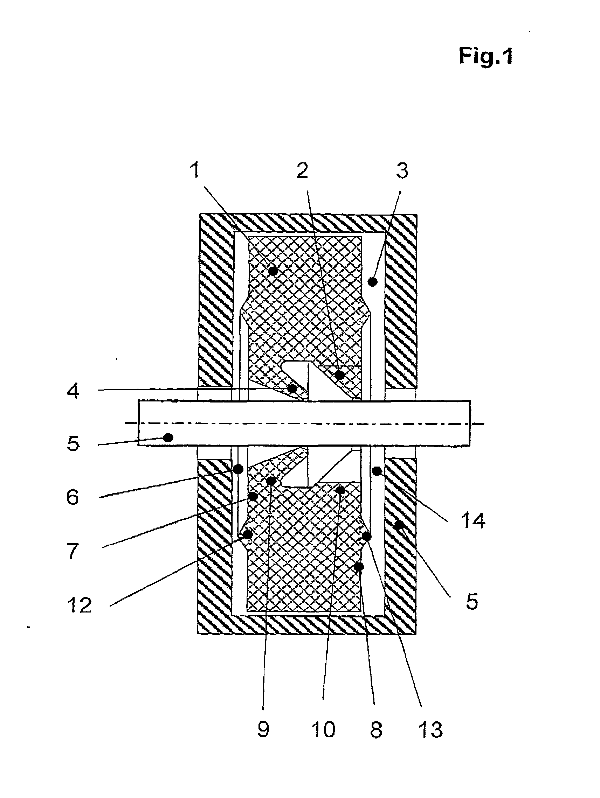

In Fig. 1 ist die Dichtlippe, in axialer Richtung des Dichtrings betrachtet, zwischen den Stirnseiten des Dichtrings angeordnet; die dem abzudichtenden Raum axial abgewandte Stirnseite des Dichtrings wird durch eine gedachte Radialebene gebildet, wobei die Dichtlippe der gedachten Radialebene, in der die dem abzudichtenden Raum axial abgewandte Stirnseite des Dichtrings angeordnet ist, mit axialem Abstand benachbart zugeordnet ist.

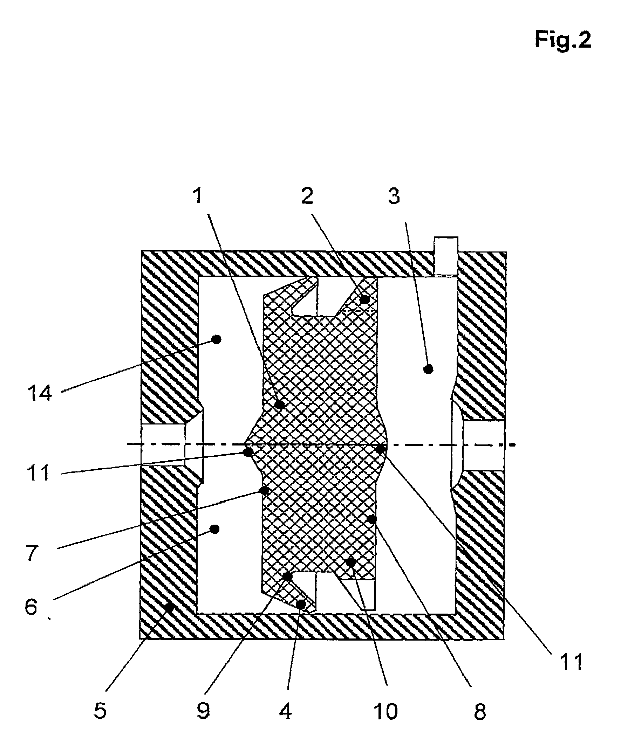

Fig. 2 umfasst ebenfalls einen starren Ring, der das Führungselement und die Dichtlippe miteinander koppelt, wobei in dem vorbekannten Ausführungsbeispiel zwei in Richtung des abzudichtenden Raums vorgewölbte Dichtlippen vorgesehen sind, von denen eine etwa axial mittig des Dichtrings und die andere an der dem abzudichtenden Raum axial abgewandten Stirnseite des Dichtrings angelenkt ist. Durch den starren Ring und auch durch die axial mittig angeordnete Dichtlippe, sind das Führungselement und die stirnseitig angeordnet Dichtlippe gekoppelt, d.h. funktionstechnisch miteinander verbunden.

Aus der DE 44 09 642 A1 ist ein weiterer Dichtring bekannt. Der Dichtring umfasst einen Tragkörper und zumindest ein Führungselement, das außenumfangsseitig von einer Ringwendelfeder umschlossen ist und die Oberfläche der abzudichtenden Welle unter elastischer Vorspannung unmittelbar anliegend berührt. Mit axialem Abstand zum Führungselement ist eine Dichtlippe angeordnet, die axial in Richtung des Führungselements vorgewölbt ist. Das Führungselement ist auf der dem abzudichtenden Raum zugewandten Stirnseite des Dichtrings angeordnet. Die Dichtlippe ist etwa axial mittig des Dichtrings angeordnet.
Dadurch, dass das Führungselement in unmittelbarer Nähe der Dichtlippe angeordnet ist, soll bewirkt werden, dass sich die Dichtlippe stets in dichtendem Kontakt mit der Oberfläche der abzudichtenden Welle befindet. Insgesamt soll der Dichtlippe gegenüber dem Führungselement eine gewisse Bewegungsfreiheit eingeräumt werden.

Ein weiterer Dichtring ist beispielsweise aus der EP 0 563 439 B1 bekannt, wobei dieser Dichtring nutringförmig ausgebildet ist. Der vorbekannte Dichtring umfasst einen Tragkörper, ein Führungselement und zwei in Richtung des abzudichtenden Raums vorgewölbte Dichtlippen, die einander radial mit Abstand benachbart zugeordnet sind. Das Führungselement und die Dichtlippen sind mit dem Tragkörper verbunden. Das Führungselement umschließt eine abzudichtende Stange außenumfangsseitig, und der Dichtring dichtet die hin- und hergehende Stange gegenüber einem die Stange außenumfangsseitig umschließenden Gehäuse ab. Dadurch, dass das Führungselement auf der dem abzudichtenden Raum abgewandten Seite der Dichtlippen angeordnet ist, wirkt das Führungselement bei radialen Verlagerungen, beispielsweise durch eine sich in radialer Richtung verlagernde Stange, auf den Anbindungsbereich der Dichtlippen am Tragkörper. Durch die Wirkung des Führungselements auf den Anbindungsbereich der Dichtlippen und dadurch auf die Dichtlippen selbst, variiert der Anpressdruck, mit dem die Dichtlippen die abzudichtenden Flächen anliegend berühren, was im Hinblick auf eine zuverlässige Abdichtung wenig zufriedenstellend ist.

### Darstellung der Erfindung

Der Erfindung liegt die Aufgabe zugrunde, einen Dichtring der eingangs genannten Art derart weiterzuentwickeln, dass Bewegungen des Führungselements in radialer Richtung einen wesentlich verringerten Einfluss auf die Abdichtung der Dichtlippe an einem abzudichtenden Maschinenelement haben und dass der Dichtring einfach und kostengünstig herstellbar ist und die Gefahr von Montagefehlern und Toleranzspiele auf ein Minimum begrenzt sind.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Dichtring vorgesehen, umfassend einen Tragkörper, ein Führungselement und eine Dichtlippe, die mit axialem Abstand zum Führungselement angeordnet und axial in dessen Richtung und axial in Richtung des abzudichtenden Mediums in einen abzudichtenden Raum vorgewölbt ist, wobei das Führungselement an der zweiten Stirnseite des Tragkörpers angelenkt ist und wobei die Dichtlippe an der der zweiten Stirnseite axial gegenüberliegend angeordneten ersten Stirnseite des Tragkörpers angelenkt ist, wobei zur Erzielung eines größtmöglichen axialen Abstands zwischen Führungselement und Dichtlippe, für eine möglichst weitgehende funktionstechnische Entkopplung von Führungselement und Dichtlippe, axial zwischen dem stirnseitig einerseits angeordneten Führungselement und der stirnseitig andererseits angeordneten Dichtlippe kein weiteres Führungselement und/oder keine weitere Dichtlippe angeordnet ist, wobei der Tragkörper mit dem Führungselement und der Dichtlippe einstückig und materialeinheitlich ausgebildet ist. Hierbei ist von Vorteil, dass ein derartiger Dichtring besonders einfach und kostengünstig herstellbar ist und dass durch seine Einstückigkeit Montagefehler und Toleranzspiele auf ein Minimum begrenzt sind.

Bei dem erfindungsgemäßen Dichtring ist außerdem von hervorzuhebendem Vorteil, dass sich das Führungselement und die Dichtlippe während der bestimmungsgemäßen Verwendung des Dichtrings gegenseitig so gut wie nicht beeinflussen, also im Wesentlichen funktionstechnisch voneinander entkoppelt sind. Weitgehend unabhängig davon, wie sich das Führungselement und die Dichtlippe in axialer Richtung relativ zueinander bewegen, haben diese Bewegungen keinen Einfluss auf den jeweiligen anderen Bestandteil des Dichtrings. Gelangt der Dichtring beispielsweise zum Abdichten rotierender Wellen zur Anwendung und die abzudichtende Welle weist eine Unrundheit und/oder eine Unwucht auf, können das Führungselement und die Dichtlippe diesen Bewegungen der abzudichtenden Welle folgen, ohne dass die radiale Bewegung des Führungselements die Funktion der Dichtlippe negativ beeinflusst,

Die Dichtlippe ist an der ersten Stirnseite des Tragkörpers angelenkt, die dem abzudichtenden Raum abgewandt ist. An der der ersten Stirnseite in Richtung des abzudichtenden Raums zugewandten zweiten Stirnseite ist das Führungselement angeordnet, sodass der axiale Abstand zwischen dem gelenkförmigen Anlenkbereich der Dichtlippe an der ersten Stirnseite und der Anlenkung des Führungselements im Bereich der zweiten Stirnseite größtmöglich ist. Die Dichtlippe und das Führungselement sind dadurch bestmöglich funktionstechnisch voneinander entkoppelt.

Das Führungselement kann aus einem polymeren Werkstoff bestehen. Für viele Anwendungsfälle ist ein Führungselement besonders gut geeignet, das aus einem PTFE-Compound besteht. Innerhalb einer kurzen Zeit nach Inbetriebnahme des Dichtrings glasiert die Oberfläche des Führungselements, mit der dieser auf dem abzustützenden Maschinenelement angeordnet ist und wird dadurch sehr hart und verschleißfest. Für manche Anwendungsfälle kann es auch sinnvoll sein, dass die Dichtlippe aus einem PTFE-Compund besteht. In einem solchen Fall sind dann das Führungselement und die Dichtlippe einstückig und materialeinheitlich ausgebildet.

Für viele Anwendungsfälle ist eine Dichtlippe gut geeignet, die aus einem elastomeren Werkstoff besteht. Eine solche Dichtlippe passt sich besonders gut an die Oberflächenkontur des abzudichtenden Maschinenelements an. Auch das Führungselement kann, wenn es ausreichend gegenüber dem abzudichtenden Maschinenelement geschmiert ist, aus einem elastomeren Werkstoff bestehen. Für diesen Fall besteht auch der Tragkörper aus einem elastomeren Werkstoff, wobei der gesamte Dichtring dadurch einstückig und materialeinheitlich ausgebildet ist.

Der Tragkörper kann eine Dichtfunktion übernehmen, wenn er aus elastomerem Werkstoff besteht. Der Tragkörper kann zumindest eine Dichtlippe aufweisen, die einen einstückigen und materialeinheitlichen Bestandteil des Tragkörpers bildet.

Das Führungselement kann an das Maschinenelement anlegbar sein, an das auch die Dichtlippe unter elastischer Vorspannung dichtend anlegbar ist. Speziell für einen solchen Anwendungsfall ist der beanspruchte Dichtring besonders vorteilhaft. Hier macht sich sehr positiv bemerkbar, dass das Führungselement und die Dichtlippe funktionstechnisch voneinander entkoppelt sind. Das Führungselement und die Dichtlippe können eine abzudichtende Welle außenumfangsseitig umschließen. Generell besteht jedoch auch die Möglichkeit, dass sich das Führungselement und die Dichtlippe an einem relativ beweglichen Gehäuse abstützen, das eine Welle außenumfangsseitig umschließt.

Unabhängig davon, ob der Dichtring als Stangen- oder Kolbendichtung oder als Radialwellendichtring zur Anwendung gelangt, sind das Führungselement und die Dichtlippe, sofern sie am selben Maschinenelement abgestützt sind, einander mit axialem Abstand benachbart zugeordnet.

Das Führungselement und die Dichtlippe sind zur Erzielung einer möglichst vollständigen funktionstechnischen Entkopplung voneinander jeweils an einer der einander gegenüberliegenden Stirnseiten des Tragkörpers festgelegt.

### Kurzbeschreibung der Zeichnung

Zwei Ausführungsbeispiele des erfindungsgemäßen Dichtrings werden nachfolgend anhand der Figuren 1 und 2 näher beschrieben. Diese zeigen jeweils in schematischer Darstellung:
- Figur 1: Ein erstes Ausführungsbeispiel eines Dichtrings, der als Stangendichtung zur Anwendung gelangt, bei dem Tragkörper, Führungselement und Dichtlippe einstückig ineinander übergehend und materialeinheitlich ausgebildet sind.
- Figur 2: Ein zweites Ausführungsbeispiel, ähnlich dem Ausführungsbeispiel aus Figur 1, wobei der Dichtring als Kolbendichtung zur Anwendung gelangt.

### Ausführung der Erfindung

In den Figuren 1 und 2 ist jeweils ein Dichtring gezeigt, der einen Tragkörper 1 umfasst, an dem ein Führungselement 2 und eine Dichtlippe 4 angeordnet sind.

Die Dichtlippe 4 ist in Richtung des abzudichtenden Raums 3 vorgewölbt, und das Führungselement 2 ist auf der dem abzudichtenden Raum 3 zugewandten Seite der Dichtlippe 4 angeordnet. Das Führungselement 2 und die Dichtlippe 4 sind zur Erzielung einer möglichst vollständigen funktionstechnischen Entkopplung voneinander jeweils an einer der einander gegenüberliegenden Stirnseiten 8, 7 des Tragkörpers 1 festgelegt.

In Figur 1 ist ein erstes Ausführungsbeispiel des erfindungsgemäßen Dichtrings gezeigt, wobei der Tragkörper 1, das Führungselement 2 und die Dichtlippe 4 einstückig ineinander übergehend und materialeinheitlich ausgebildet sind. Der gesamte Dichtring besteht in diesem Ausführungsbeispiel aus einem elastomeren Werkstoff und ist als Stangendichtung ausgebildet, wobei das Führungselement 2 durch gleichmäßig in Umfangsrichtung verteilte Führungsnocken gebildet ist, so dass der innerhalb des abzudichtenden Raums 3 wirksame Druck, der bezogen auf den Druck in der Umgebung 6 zumindest genauso groß, bevorzugt höher ist, auf die in Richtung des abzudichtenden Raums 3 vorgewölbte Dichtlippe 4 wirkt und dadurch eine verstärkte Anpressung an die Oberfläche des abzudichtenden Maschinenelements 5 bewirkt, Das Maschinenelement 5 ist hier als Welle ausgebildet.

Während der bestimmungsgemäßen Verwendung des Dichtrings berührt in diesem Ausführungsbeispiel nur die Dichtlippe 4 die Oberfläche des abzudichtenden Maschinenelements 5 anliegend. Das Führungselement 2 hält gegenüber dem Maschinenelement 5 zwecks geringstmöglicher Reibung einen geringen radialen Abstand und gelangt nur dann mit der Oberfläche des Maschinenelements 5 in Berührung, wenn es zur radialen Auslenkung oder Schiefstellung des Tragkörpers 1 kommt.

In diesem Ausführungsbeispiel ist der Tragkörper 1 im Bereich seiner beiden axialen Stirnseiten jeweils mit einer Dichtkante 12, 13 versehen. Die Dichtkanten 12, 13 bilden einen einstückigen und materialeinheitlichen Bestandteil des Tragkörpers 1.
In Figur 2 ist ein zweites Ausführungsbeispiel eines erfindungsgemäßen Dichtrings gezeigt, ähnlich dem Ausführungsbeispiel aus Figur 1, wobei der Dichtring als Kolbendichtung ausgebildet ist. Das Maschinenelement 5 wird in diesem Ausführungsbeispiel durch ein Gehäuse gebildet, das den Dichtring außenumfangsseitig umschließt.

Zur Zentrierung des Dichtrings innerhalb seines Einbauraums 14 ist im Bereich jeder der Stirnseiten 7, 8 ein zentral angeordneter Zentriervorsprung 11 vorgesehen, der beispielsweise die hier im Längsschnitt dargestellte Form aufweisen kann.

## Patentansprüche

1. Dichtring, umfassend einen Tragkörper (1), ein Führungselement (2) und eine Dichtlippe (4), die mit axialem Abstand zum Führungselement (2) angeordnet und axial in dessen Richtung und axial in Richtung des abzudichtenden Mediums in einen abzudichtenden Raum (3) vorgewölbt ist, wobei das Führungselement (2) an der zweiten Stirnseite (8) des Tragkörpers (1) angelenkt ist und wobei die Dichtlippe (4) an der der zweiten Stirnseite (8) axial gegenüberliegend angeordneten ersten Stirnseite (7) des Tragkörpers (1) angelenkt ist, wobei zur Erzielung eines größtmöglichen axialen Abstands zwischen Führungselement (2) und Dichtlippe (4), für eine möglichst weitgehende funktionstechnische Entkopplung von Führungselement (2) und Dichtlippe (4), axial zwischen dem stirnseitig einerseits angeordneten Führungselement (2) und der stirnseitig andererseits angeordneten Dichtlippe (4) kein weiteres Führungselement und/oder keine weitere Dichtlippe angeordnet ist, wobei der Tragkörper (1) mit dem Führungselement (2) und der Dichtlippe (4) einstückig und materialeinheitlich ausgebildet ist.

2. Dichtring nach Anspruch 1, **dadurch gekennzeichnet, dass** das Führungselement (2) aus einem polymeren Werkstoff besteht.

3. Dichtring nach einem der Ansprüche 1 oder 2, **dadurch gekennzeichnet, dass** die Dichtlippe (4) aus einem elastomeren Werkstoff besteht.

4. Dichtring nach einem der Ansprüche 1 bis 3, **dadurch gekennzeichnet, dass** der Tragkörper (1) und/oder das Führungselement (2) einen sich in axialer Richtung erstreckenden Zentriervorsprung (11) aufweisen.

5. Dichtring nach einem der Ansprüche 1 bis 4, **dadurch gekennzeichnet, dass** das Führungselement (2) an das Maschinenelement anlegbar ist, an das auch die Dichtlippe (4) unter elastischer Vorspannung dichtend anlegbar ist.

6. Dichtring nach einem der Ansprüche 1 bis 5, **dadurch gekennzeichnet, dass** das Führungselement (2) und die Dichtlippe (4) im Gebrauch ein abzudichtendes Maschinenelement (5) außenumfangsseitig dichtend umschließen.

7. Dichtring nach einem der Ansprüche 1 bis 6, **dadurch gekennzeichnet, dass** das Führungselement (2) und die Dichtlippe (4) im Gebrauch von einem Maschinenelement (5) außenumfangsseitig dichtend umschlossen sind.

## Claims

1. Sealing ring, comprising a supporting body (1), a guiding element (2) and a sealing lip (4), which is arranged at an axial distance from the guiding element (2) and is made to protrude axially in the direction of the said guiding element and axially in the direction of the medium that is to be sealed in a space (3) that is to be sealed, the guiding element (2) being articulated on the second end face (8) of the supporting body (1) and the sealing lip (4) being articulated on the first end face (7) of the supporting body (1), arranged axially opposite from the second end face (8), no further guiding element and/or no further sealing lip being arranged axially between the guiding element (2) arranged at one end face and the sealing lip (4) arranged at the other end face to achieve the greatest possible axial distance between the guiding element (2) and the sealing lip (4), for the purpose of functionally isolating the guiding element (2) and the sealing lip (4) as far as possible, the supporting body (1) being formed together with the guiding element (2) and the sealing lip (4) as one part and of one material.

2. Sealing ring according to Claim 1, **characterized in that** the guiding element (2) consists of a polymeric material.

3. Sealing ring according to either of Claims 1 and 2, **characterized in that** the sealing lip (4) consists of an elastomeric material.

4. Sealing ring according to one of Claims 1 to 3,
**characterized in that** the supporting body (1) and/or the guiding element (2) have a centring projection (11) extending in the axial direction.

5. Sealing ring according to one of Claims 1 to 4, **characterized in that** the guiding element (2) can be placed against the machine element, against which the sealing lip (4) can also be placed in a sealing manner under elastic prestress.

6. Sealing ring according to one of Claims 1 to 5, **characterized in that**, during use, the guiding element (2) and the sealing lip (4) enclose in a sealing manner, around the outer circumference, a machine element (5) that is to be sealed.

7. Sealing ring according to one of Claims 1 to 6, **characterized in that**, during use, the guiding element (2) and the sealing lip (4) are enclosed in a sealing manner, around the outer circumference, by a machine element (5).

## Revendications

1. Joint d'étanchéité, comprenant un corps de support (1), un élément de guidage (2) et une lèvre d'étanchéité (4), qui est disposée à distance axiale de l'élément de guidage (2) et est précintrée axialement dans la direction de celui-ci et axialement dans la direction du fluide à retenir de façon étanche dans un espace à rendre étanche (3), l'élément de guidage (2) étant articulé sur la deuxième face frontale (8) du corps de support (1) et la lèvre d'étanchéité (4) étant articulée sur la première face frontale (7) du corps de support (1) située axialement à l'opposé par rapport à la deuxième face frontale (8), aucun autre élément de guidage et/ou aucune autre lèvre d'étanchéité n'étant disposé(e) axialement entre l'élément de guidage (2) disposé frontalement d'une part et la lèvre d'étanchéité (4) disposée frontalement d'autre part pour créer une distance axiale aussi grande que possible entre l'élément de guidage (2) et la lèvre d'étanchéité (4) pour une séparation technique fonctionnelle aussi large que possible de l'élément de guidage (2) et de la lèvre d'étanchéité (4), le corps de support (1) étant réalisé d'un seul tenant et en continuité de matière avec l'élément de guidage (2) et la lèvre d'étanchéité (4).

2. Joint d'étanchéité selon la revendication 1, **caractérisé en ce que** l'élément de guidage (2) se compose d'un matériau polymère.

3. Joint d'étanchéité selon l'une quelconque des revendications 1 ou 2, **caractérisé en ce que** la lèvre d'étanchéité (4) se compose d'un matériau élastomère.

4. Joint d'étanchéité selon l'une quelconque des revendications 1 à 3, **caractérisé en ce que** le corps de support (1) et/ou l'élément de guidage (2) présentent une saillie de centrage (11) s'étendant en direction axiale.

5. Joint d'étanchéité selon l'une quelconque des revendications 1 à 4, **caractérisé en ce que** l'élément de guidage (2) peut être appliqué sur l'élément de machine sur lequel la lèvre d'étanchéité (4) peut également être appliquée de façon étanche avec une précontrainte élastique.

6. Joint d'étanchéité selon l'une quelconque des revendications 1 à 5, **caractérisé en ce que** l'élément de guidage (2) et la lèvre d'étanchéité (4) entourent en service, de façon étanche sur la périphérie extérieure, un élément de machine à rendre étanche (5).

7. Joint d'étanchéité selon l'une quelconque des revendications 1 à 6, **caractérisé en ce que** l'élément de guidage (2) et la lèvre d'étanchéité (4) sont entourés en service, de façon étanche sur la périphérie extérieure, par un élément de machine (5).
